# EUROPÄISCHE PATENTSCHRIFT

(11) **EP 3 945 763 B1**
(45) Veröffentlichungstag und Bekanntmachung des Hinweises auf die Patenterteilung: **26.04.2023**
(21) Anmeldenummer: 20714529.3
(22) Anmeldetag: 24.03.2020
(51) Int. Cl.: A01B 9/00, A01B 13/08, A01B 49/02, A01B 15/16, A01B 15/10

(54) **PFLUGMODUL**
PLOUGH MODULE
MODULE DE LABOUR

(30) Priorität: 27.03.2019 DE 102019204256
(43) Veröffentlichungstag der Anmeldung: 09.02.2022
(73) Patentinhaber: Huber Soil Solution GmbH, 8435 Wagna (AT)
(72) Erfinder: HUBER, Franz-Ferdinand, 8435 Wagna (AT)
(74) Vertreter: Leske, Thomas
(86) Internationale Anmeldenummer: PCT/EP2020/058132
(87) Internationale Veröffentlichungsnummer: WO 2020/193537

(56) Entgegenhaltungen:
- DE-A1-102017 102 683
- GB-A- 1 385 951
- SE-C2- 505 778

## Beschreibung

Die vorliegende Erfindung betrifft ein Pflugmodul zur auswechselbaren Montage an einem Grundgerüst einer Pflugvorrichtung zum Pflügen eines Bodens gemäß Oberbegriff des Anspruchs 1 sowie gemäß Anspruch 12 eine Pflugvorrichtung, die mit zumindest einem derartigen Pflugmodul ausgerüstet ist.

Beim Pflügen mit einer derartigen Pflugvorrichtung, die üblicherweise von einem Traktor gezogen wird, werden aus dem Boden sogenannte Erdbalken herausgeschnitten. Ein Erdbalken weist einen Seitenbereich auf, entlang welchem ein erstes Schneidelement schneidet bzw. geschnitten hat. Ferner weist der Erdbalken einen Bodenbereich auf, welcher die beiden Seitenbereiche verbindet und mittels eines zweiten Schneidelements von dem Boden getrennt wird. Entsprechend weist der Boden an dem Bodenbereich des Erdbalkens eine Trennfläche auf (sog. Furchensohle). Aus dem Boden wird somit ein ungefähr rechteckiger Erdbalken herausgeschnitten, wobei eine horizontale Schnittebene (=Furchensohle) mittels des zweiten Schneidelements und vertikale Schnittebene (=Furchenwand) mittels des ersten Schneidelements an dem Restboden entsteht. Durch das Herausschneiden des Erdbalkens wird im Boden eine Furchenwand gebildet, von welcher der Seitenbereich des Erdbalkens gelöst wurde. Der Bodenbereich definiert somit zum Zeitpunkt des Trennens von dem Boden die vertikal unterste Fläche des Erdbalkens.

Es wird darauf hingewiesen, dass die Begriffe "horizontal" und "vertikal" sowie "oben" und "unten" sich auf Anordnungen und Ausbildungen der Pflugvorrichtungen und damit des an diesen befestigten erfindungsgemäßen Pflugmoduls beziehen, wobei die Pflugvorrichtung bestimmungsgemäß auf dem Boden aufliegend und im Pflügbetrieb entlang der Bearbeitungsrichtung bewegbar betrachtet wird.

In GB 1 385 951 ist eine Maschine zum Abtragen von Oberflächenschichten beim Straßenbau oder bei deren Instandhaltung beschrieben. Die darin beschriebene Maschine weist zwei Schneidelemente auf, nämlich eine Hohlscheibe, welche eine Oberflächenschicht durch entsprechende Rotation wegschabt, während eine dazu nachlaufende ebene Scheibe einen Seitenbereich schneidet. Dabei ist die im Wesentlichen in Richtung auf den wegzuschabenden Boden senkrecht zu diesem angeordnete Antriebswelle hohl ausgebildet, um entsprechende Unkrautvernichtungsmittel oder andere pulverartige, flüssige oder gasförmige Substanzen in den bearbeiteten Bereich einzubringen. Sofern die ebene Scheibe aus der Vorrichtung entfernt wird, kann bezüglich der Hohlscheibe auch mit anderen Winkeln der Trägerachse gearbeitet werden. Die ebene Scheibe ist in diesem Sinne ein Zusatzgerät; kein Teil eines Moduls. Zum Pflügen eignet sich die bekannte Maschine nicht.

Eine einschlägige Pflugvorrichtung ist aus DE 10 2017 102 683 A1 bekannt. Am Grundgerüst dieser Pflugvorrichtung ist ein rotierbares, als Schneidteller ausgebildetes erstes Schneidelement mit einer umlaufenden ersten Schneidkante angeordnet, wobei das erste Schneidelement derart ausgebildet ist, dass durch Bewegen der Pflugvorrichtung auf dem Boden entlang einer Pflügrichtung ein Seitenbereich eines Erdbalkens des Bodens abschneidbar ist. Die Pflügrichtung oder Bearbeitungsrichtung ist definiert als die Richtung, entlang welcher die Pflugvorrichtung über dem Boden verfahren wird. Ein zweites, ebenes Schneidelement mit einer zweiten Schneidkante ist ebenfalls am Grundgerüst befestigt und ist in Pflügrichtung vor dem ersten Schneidelement angeordnet. Das zweite Schneidelement ist derart ausgebildet ist, dass durch Bewegen des Pflugmoduls auf dem Boden entlang einer Pflügrichtung der Bodenbereich des Erdbalkens abschneidbar ist. Beim Pflügen mit dieser Pflugvorrichtung wird zunächst der Bodenbereich eines zu bildenden Erdbalkens mittels des zweiten Schneidelements geschnitten. Das nachfolgende erste Schneidelement, das als bombierter Schneidteller ausgebildet ist, schneidet anschließend einen Seitenbereich des Erdbalkens und legt diesen gewendet in der gebildeten Furche ab. Eine derartige Pflugvorrichtung erfordert gegenüber konventionellen Pflügen mit Pflugkörpern und Streichblechen eine deutlich verringerte Zugkraft.

Von Nachteil bei einer Pflugvorrichtung gemäß DE 10 2017 102 683 A1 ist, dass die verschiedenen Schneidelemente einzeln am Grundgerüst montiert sind, was eine Montage oder Nachrüstung an einem konventionellen Grundgerüst für Pflüge schwierig macht. Zudem ist die räumliche Ausrichtung der beiden Schneidelemente zueinander kompliziert und deren Einstellung bzw. Verstellung oft nur in geringem Umfang möglich.

Aufgabe der Erfindung ist es, eine Baueinheit bereitzustellen, die alle Funktionen des eingangs beschriebenen Pfluges bzw. des Pflügeverfahrens ermöglicht, die austauschbar an einem Grundgerüst einer Pflugvorrichtung montierbar ist und die ein leichtzügiges Pflügen ermöglicht.

Die Aufgabe wird mit einem Pflugmodul mit den Merkmalen gemäß Anspruch 1 gelöst. Zweckmäßige Weiterbildungen sind in den abhängigen Ansprüchen definiert.

Diese Aufgabe wird gelöst, indem das Pflugmodul als fertig montierte Baueinheit ausgebildet ist und mit einer ersten Trägerstruktur, an der das erste Schneidelement angeordnet ist, und mit einer zweiten Trägerstruktur versehen ist, an der das zweite Schneidelement angeordnet ist und die mit der ersten Trägerstruktur verbunden ist, und dadurch, dass die erste Trägerstruktur Mittel zur lösbaren Befestigung an einem Grundgerüst einer Pflugvorrichtung aufweist, bei welcher ein Pflugmodul vorgesehen ist, bei welchem das zweite Schneidelement in Pflügrichtung nach dem ersten Schneidelement angeordnet ist.

Gemäß einem ersten Aspekt der vorliegenden Erfindung wird das Pflugmodul für eine Pflugvorrichtung zum Pflügen eines Bodens beschrieben. Das Pflugmodul weist eine erste Trägerstruktur auf, an der ein rotierbares Schneidelement angeordnet ist, welches als bombierte Scheibe ausgebildet ist. Ein zweites Schneidelement, z. B. eine weitere, zum ersten Schneidelement in einem definierten Winkel angeordnete Scheibe oder ein Schneidmesser, ist auf einer zweiten Trägerstruktur montiert, die ihrerseits fest mit der ersten Trägerstruktur verbunden ist. Das rotierbare erste Schneidelement weist eine umlaufende erste Schneidkante auf und ist derart ausgebildet, dass bei Bewegen der Pflugvorrichtung mit der Trägerstruktur auf dem Boden entlang von deren Pflügrichtung, d. h. der Bearbeitungsrichtung, ein Seitenbereich eines Erdbalkens des Bodens, insbesondere von einer Furchenwand, mittels eines ersten Schneidbereichs der ersten Schneidkante abgeschnitten wird. Die erste und die zweite Trägerstruktur sind fest miteinander verbunden und sind gemeinsam an der Grundstruktur der Pflugvorrichtung angeordnet. Das zweite Schneidelement weist eine zweite Schneidkante auf, wobei das zweite Schneidelement an der zweiten Trägerstruktur angeordnet ist und derart ausgebildet ist, dass bei Bewegen des Pflugmoduls auf dem Boden entlang der Pflügrichtung ein Bodenbereich eines Erdbalkens des Bodens, insbesondere entlang einer Trennfläche zwischen Erdbalken und Pflügsohle, mittels eines zweiten Schneidbereichs der zweiten Schneidkante abschneidbar ist. Das zweite Schneidelement ist relativ zu dem ersten Schneidelement in Pflügrichtung derart angeordnet, dass der zweite Schneidbereich in Pflügrichtung hinter dem ersten Schneidbereich liegt.

Vorzugsweise sind die jeweiligen Schneidelemente an dem Pflugmodul bezüglich ihrer Position zueinander verstellbar, vorzugsweise schwenkbar. Dies stellt einen deutlichen Vorteil gegenüber den bekannten Pflugvorrichtungen dar. So kann beispielsweise ein Pflugmodul verwendet werden, bei welchem das erste Schneidelement für die Seitentrennung des Erdbalkens vor dem zweiten Schneidelement für die Bodentrennung des Erdbalkens angeordnet sein.

Vorzugsweise weist eine Pflugvorrichtung mehrere Pflugmodule auf, beispielsweise drei bis acht Module auf einer Pflugseite, d. h. bezogen auf ein Grundgerüst sechs bis 16 Module insgesamt. Gegenüber den bekannten Pflugvorrichtungen, bei welchen das erste Schneidelement zum Schneiden der Seite eines Erdbalkens hinter dem zweiten Schneidelement angeordnet ist, welches den Boden eines Erdbalkens bzw. einer Furche, aus welchem der Erdbalken geschnitten wird, schneidet. Diese bekannte Anordnung ist offensichtlich gewählt worden, weil das erste Schneidelement im Zusammenwirken beispielsweise mit einem Leitblech oder in einer Ausgestaltung als Hohlscheibe für das Wenden des herausgeschnittenen Erdbalkens zuständig ist. Dazu muss die Sohle einer Furche, d. h. die untere Seite eines Erdbalkens bereits geschnitten sein. Daher wurde bei den bekannten Einrichtungen das zweite Schneidelement bezüglich seiner aktiven Schneide vor dem ersten Schneidelement angeordnet. Durch diese Anordnung kann das erste Schneidelement nach seinem Schneiden der Seitenwand des Erdbalkens diesen unmittelbar wenden, da die Furchensohle ja bereits geschnitten ist. Damit das erste Schneidelement zuverlässig die Seite schneiden kann oder in einer gekrümmten Ausbildung auch den Erdbalken zum Wenden vorbereiten und das Wenden initiieren kann, muss natürlich der Antrieb bzw. die Lagerung bzw. die Halterung des ersten Schneidelementes auf dessen Rückseite vorgesehen sein. Das wiederum bedeutet aber, dass das zweite Schneidelement das erste Schneidelement jeweils gesonderte Träger aufweisen müssen, mittels welcher sie an dem Gerüst angebracht sind. Damit wird eine Einstellung der beiden Schneidelemente zueinander erheblich erschwert.

Demgegenüber ist bei der vorliegenden Erfindung das erste Schneidelement, welches die Seite des Erdbalkens schneidet, vor dem zweiten Schneidelement angeordnet, welches die Bodenfläche des Erdbalkens bzw. der Furche schneidet. Normalerweise wird dies nicht in Betracht gezogen, weil bei einer Pflugvorrichtung, bei welcher in Zugrichtung zuerst das erste Schneidelement zum Schneiden der Seite des Erdbalkens angeordnet ist, nicht auch noch die Funktion des Wendens ausführen kann, obwohl die Form als Hohlscheibe ausgebildet ist und prinzipiell zum Wenden des Erdbalkens vorgesehen ist. Denn der Furchenboden wurde ja noch nicht geschnitten. Darin besteht gerade der Vorteil des erfindungsgemäßen Moduls, dass nur zwei Schneidelemente, ohne dass ein Leitblech oder Streichblech erforderlich ist, vorgesehen sein müssen. Der Vorteil gemäß der Erfindung besteht nun auch darin, dass aufgrund der Tatsache, dass das erste Schneidelement an seiner Rückseite den Antrieb bzw. die Lagerung bzw. die Trägerstruktur aufweist und bei einer Anordnung vor dem zweiten Schneidelement, welches eine Trägerstruktur ebenfalls aufweist, die beiden Trägerstrukturen von dem ersten Schneidelement und von dem zweiten Schneidelement miteinander verbunden werden können, so dass ein Modul entsteht, welches mit einer einzigen Aufhängung am Trägergerüst der Pflugvorrichtung angebracht werden kann. Der entscheidende Vorteil besteht darin, dass eine herkömmliche Pflugvorrichtung mit Pflugkörpern umgebaut werden kann, und zwar ohne größeren Aufwand, indem die Pflugkörper demontiert und ein entsprechendes Modul montiert werden. Selbstverständlich können die herkömmlichen Grundgerüste, Pflugbäume auch genannt, gleich werksseitig mit den erfindungsgemäßen Pflugmodulen versehen werden.

In überraschender Weise hat sich nun gezeigt, dass bei einer Pflugvorrichtung mit vorlaufendem Schneidelement als Hohlscheibe ein Schneiden des Seitenbereiches möglich ist, ohne dass zunächst ein Wenden sich anschließt, da der Furchenboden noch nicht geschnitten ist. Dies erledigt erst das nachlaufende zweite Schneidelement. Wenn bei einer Pflugvorrichtung mehrere derartige Module hintereinander angeordnet sind, so hat sich gezeigt, dass schon beim, in Pflügrichtung gesehen, ersten Modul folgenden zweiten Modul das erste Schneidelement nicht nur die dort vorhandene Seitenfläche des Erdbalkens schneidet, sondern dass dort bereits durch das erste Modul die Bodenfurche geschnitten ist. Damit kann vom zweiten Modul die gewünschte Funktion unmittelbar ausgeübt werden, nämlich dass das erste Schneidelement in Form einer Hohlscheibe die Seitenfläche des Erdbalkens schneidet und gleichzeitig den Erdbalken wenden kann.

Hinsichtlich der Konstruktion kann davon profitiert werden, dass die Halterung bzw. Trägerstruktur des ersten Schneidelementes nach hinten auf die Trägerstruktur für das zweite Schneidelement weist, so dass dort ein leichtes Anbringen und Verbinden der beiden Schneidelemente zu einem Modul möglich ist. Wenn die Pflugvorrichtung beispielsweise nur ein Pflugmodul aufweist, dann wäre beim allerersten Zug beim Pflügen eines Feldes lediglich dieser allererste Zug ein Zug, bei dem die Seite des noch nicht freigeschnittenen Erdbalkens geschnitten wird, ein Wenden aber noch nicht stattfindet. Aber bereits beim zweiten Zug würde unmittelbar ein Wenden des seitlich dann abgeschnittenen Erdbalkens mittels des ersten Schneidelementes erfolgen, da das zweite Schneidelement dort in dem Bereich bereits die Furchensohle und damit die Unterseite des Erdbalkens abgeschnitten hätte. Es ergeben sich damit erhebliche Vorteile gegenüber den herkömmlichen Pflugvorrichtungen. Ein Auswechseln oder Umrüsten herkömmlicher Pflugvorrichtungen mit Pflugkörpern auf die erfindungsgemäßen Pflugmodule ist ohne Weiteres möglich. Es ist ohne Weiteres auch möglich, aufgrund der Modularität rasch Defekte oder wegen einer veränderten Bodenstruktur entsprechend angepasste andere Pflugmodule an der Pflugvorrichtung auszuwechseln.

Besonders vorteilhaft ist das erfindungsgemäße Pflugmodul, wenn sowohl das erste als auch das zweite Schneidelement bezüglich ihrer Positionen einstellbar sind. Damit ergibt sich eine Einstellbarkeit auf den zu pflügenden Boden wie auch eine Einstellbarkeit der beiden Schneidelemente zueinander. Das zweite Schneidelement ist dabei schwenkbar an der Trägerstruktur, an welcher das erste Schneidelement befestigt ist, um die Neigung des zweiten Schneidelementes beim Durschneiden durch den Boden leicht nach unten zu richten, um ein Herausfahren dieses furchenbodenschneidenden Schneidelementes während des Pflügens zu verhindern und gleichzeitig das erste Schneidelement im Boden zu halten. Das erste Schneidelement ist in mehrere Richtungen schwenkbar und versetzbar, weist also mehrere Freiheitsgrade auf, um ein entsprechend optimales Pflügergebnis im Zusammenwirken der beiden Schneidelemente zueinander zu realisieren.

Das Vorsehen von mehreren Modulen an einer Pflugvorrichtung hat des Weiteren den Vorteil, dass eine größere Breite in einem Zug mit der erfindungsgemäßen Vorrichtung gepflügt werden kann. Es ist auch ein Außer-Eingriff-Schwenken von Schneidelementen dann sinnvoll, wenn der Rand eines zu pflügenden Feldes gepflügt wird und die Breite für den letzten Zug ansonsten zu groß wäre, dass die Gefahr bestünde, dass mit dem am Weitesten seitwärts angeordneten Pflugmodul eine Bodentrennung beispielsweise eines Stückes Boden durchgeführt wird, welches möglicherweise bereits beim Nachbarfeld wäre. Um dies zu vermeiden, kann durch Außer-Eingriff-Schwenken der bzw. des entsprechenden Schneidelementes eine derartige Situation verhindert werden.

Das erfindungsgemäße Pflugmodul ist über die Grundstruktur der Pflugvorrichtung an einer Zugmaschine, wie beispielsweise einen Traktor, gekoppelt, der somit die Schneidelemente entlang der Pflügrichtung durch den Boden zieht. Die Grundstruktur kann auch Teil eines Trageisens bzw. einer Grindel sein. Mit den Pflugmodulen, welche aus an zusammengefassten Trägerstrukturen angeordneten zwei Schneidelementen bestehen, nämlich ein erstes Schneidelement zum Schneiden der Seite eines Erdbalkens und zum Wenden sowie ein zweites Schneidelement zum Schneiden der Furchensohle, kann auch auf Grindeln gänzlich verzichtet werden. Die Trägerstruktur weist Metallbalken und / oder Faserverbundelemente auf. Ferner können, wie weiter unten im Detail beschrieben ist, die angebrachten Elemente justierbar an der Trägerstruktur befestigt werden.

Der Pflugbaum bzw. das Trägergerüst, das aus der ersten und der zweiten Trägerstruktur gebildet ist, bietet somit eine starre, aber für ein Einstellen geeignete Befestigungsstruktur für die Schneidelemente an den Pflugmodulen sowie für zusätzliche Bauteile wie Gelenke oder Verstellelemente. Mit anderen Worten sind die Schneidelemente an der jeweiligen ersten oder zweiten Trägerstruktur derart fixiert, dass während des Pflügens keine Relativbewegung zwischen den Schneidelementen möglich ist. Wird beim Pflügen das zweite Schneidelement aufgrund des Schneidens des Erdbalkens in den Boden gedrückt, so wird gleichzeitig das erste Schneidelement in den Boden mittels einer Einzugskraft gedrückt. Vorzugsweise können die Schneidelemente aber auch während des Pflügens verstellbar sein, was beispielsweise elektrisch oder hydraulisch erfolgen kann.

Gemäß einer beispielhaften Ausführungsform sind bzw. ist das erste und / oder das zweite Schneidelement schwenkbar, beispielsweise mittels eines Gelenks, an der jeweiligen Trägerstruktur befestigt, so dass der Winkel zwischen der Drehachse und der Erstreckungsrichtung der zweiten Schneidkante eingestellt und in einer gewünschten Position fixiert werden kann. In einer weiteren vorteilhaften Ausführungsform der Erfindung ist die zweite Trägerstruktur selbst über ein Gelenk schwenkbar mit der ersten Trägerstruktur verbunden. Hierdurch ist der Anstellwinkel des zweiten Schneidelements in Bezug auf die Pflügrichtung einstellbar. Der Anstellwinkel ist dabei üblicherweise so, dass die vorlaufende Schneidkante leicht nach unten in die Erde hineingerichtet ist.

In einer weiteren beispielhaften Ausführungsform ist das erste Schneidelement und / oder das zweite Schneidelement schwenkbar und / oder translatorisch verschiebbar an der jeweiligen Trägerstruktur angeordnet, um den Anstellwinkel und die Positionen zueinander einzustellen. Somit kann abhängig von der Bodenbeschaffenheit und abhängig von der gewünschten Bearbeitungstiefe ein Anstellwinkel des zweiten Schneidelements in Bezug auf die Pflügrichtung eingestellt werden.

Eine Vorrichtung wie z. B. das oben beschriebene Gelenk dient zum Verstellen des Schneidelementwinkels (Teller-Scheibenwinkel) und ermöglicht die Einstellung des Schneidelement-Neigungswinkels (Vertikalneigung zur Furchenwand des Bodens) und des Schneidelement-Richtungswinkels (zur Pflügrichtung, d. h. zur Schlepperfahrrichtung). Die Schneidelinie des Schneidelements zwischen der ersten Schneidkante und der Furchenwand kann mittels einer verstellbaren Stütze höhenverstellt werden. Entsprechend kann der vertikale und/oder horizontale Abstand zwischen dem ersten Schneidelement und dem zweiten Schneidelement variabel eingestellt werden. Mit anderen Worten können in einer weiteren beispielhaften Ausführungsform das erste Schneidelement und das zweite Schneidelement derart zueinander angeordnet sein, dass der Schneidbereich der ersten Schneidkante des ersten Schneidelements von der zweiten Schneidkante des zweiten Schneidelement vertikal beabstandet ist. Mittels einer Verstellung in der horizontalen Richtung ist die Schnittbreite bzw. Pflügbreite eines Zuges einstellbar.

In Ausführung der Erfindung ist es bevorzugt, dass der erste Schneidbereich innerhalb einer ersten Schneidebene und der zweite Schneidbereich in einer zweiten Schneidebene ausgebildet sind, wobei die erste Schneidebene und die zweite Schneidebene zueinander einen Winkel von 30° bis 135°, insbesondere 45° bis 110°, ausbilden. Die Einstellung des gewünschten Winkels kann hierfür dadurch erfolgen, dass die beiden Schneidelemente schwenkbar auf der jeweils zugehörigen Trägerstruktur gelagert sind. Selbstverständlich liegt auch eine vorgegebene, feste Ausrichtung der beiden Schneidebenen im Rahmen der Erfindung.

Die erste Schneidkante läuft dabei in einer ersten Schneidebene, während die zweite Schneidkante in einer zweiten Schneidebene verläuft. Das erste Schneidelement und das zweite Schneidelement sind dabei derart relativ zueinander an der Trägerstruktur befestigt, dass die erste Schneidebene und die zweite Schneidebene dabei nicht parallel ausgebildet sind und einen Winkel von insbesondere mehr oder weniger als 90° (Öffnungswinkel) zueinander aufweisen. Mit anderen Worten kann in einer weiteren beispielhaften Ausführungsform das erste Schneidelement derart angeordnet sein, dass zwischen der Drehachse des ersten Schneidelements und einer Erstreckungsrichtung der zweiten Schneidkante (bzw. eine Tangente an dem zweiten Schneidbereich, falls das zweite Schneidelement eine rotierende Scheibe ausbildet) ein Winkel von ungefähr 0° bis ungefähr ±30° Grad vorliegt. Insbesondere weist die Normale der ersten Schneidebene eine (Richtungs-) Komponente auf, welche parallel zu einer Horizontalrichtung ist, wenn die Pflugvorrichtung bestimmungsgemäß auf dem Boden aufliegt. Die Drehachse des Schneidelements ist insbesondere parallel zu der Normalen der ersten Schneidebene. Ferner weist die Normale der zweiten Schneidebene eine weitere (Richtungs-) Komponente auf, welche parallel zu einer Vertikalrichtung ist, wenn die Pflugvorrichtung bestimmungsgemäß auf dem Boden aufliegt. Ein Winkel zwischen den Normalen kann zwischen 45° Grad und 130° Grad beispielsweise ausgewählt werden, um ein gewünschtes Furchenbild im Boden zu erzielen.

Wenn die erste Schneidebene und die zweite Schneidebene insbesondere ca. 90° zueinander aufweisen, so drückt das zweite Schneidelement den unterschnittenen Erdbalken in Richtung des ersten Schneidelementes. Dies führt dazu, dass während der Bewegung in Pflügrichtung der Erdbalken zwischen dem ersten Schneidelement und dem zweiten Schneidelement vorteilhaft bearbeitet werden kann. Durch das Zusammenwirken beider rotierenden Maschinenelemente, d. h. dem ersten und zweiten Schneidelement wird ein bevorzugtes Pflügergebnis bzw. eine "Krümelung" (Schollenzerkleinerung) bereitgestellt. Außerdem wird der starke Seitenzug des ersten Schneideelements, der sich negativ auf die Schlepperzuglinie auswirkt, durch die Gegenwirkung des zweiten Schneideelements weitgehend kompensiert. Die Zugmaschine bleibt somit ohne großes Gegensteuern in der Spur.

Das erste Schneidelement ist rotierbar bzw. drehbar an der ersten Trägerstruktur befestigt. Entsprechend weist das erste Schneidelement eine erste Drehachse auf, um welche sich das erste Schneidelement dreht. Das erste Schneidelement ist als bombierter Schneidteller ausgebildet und weist eine kreisrunde Umfangslinie auf. Entlang der Umfangslinie ist die umlaufende erste Schneidkante ausgebildet. Mittels der ersten Schneidkante wird der Seitenbereich des Erdbalkens von der Furchenwand des Bodens getrennt und der Erdbalken zugleich seitlich abgeleitet. Die umlaufende erste Schneidkante weist einen ersten Schneidbereich auf. Der erste Schneidbereich ist derjenige Umfangsabschnitt der ersten Schneidkante, welcher in Pflügrichtung vorzugsweise als erstes in Kontakt mit dem Boden kommt und diesen schneidet. Das erste Schneidelement kann einen Durchmesser von ungefähr 500 mm bis ungefähr 800 mm aufweisen. Ferner kann das erste Schneidelement eine Zahnung aufweisen, zentral gelagert und in der Position gegenüber der ersten Trägerstruktur und dem zweiten Schneidelement, vorzugsweise mittels eines Schlittens, verstellbar sein.

Von besonderem Vorteil ist es, wenn das um eine Drehachse drehbare erste Schneidelement eine Kegelform oder eine Kegelstumpfform aufweist. Hierdurch ist gewährleistet, dass der abgetrennte Erdbalken gedreht und in der benachbarten, in der bei einem zuvor erfolgten Durchgang eines Pflugmoduls erzeugten Furche abgelegt wird. Hierbei ist die Drehachse des ersten Schneidelements unter einem Winkel zur Pflügrichtung eingestellt, derart, dass die vorlaufende Kante des Schneidelements gegenüber der Pflügrichtung abgesenkt ist und das Schneidelement im Wesentlichen sich schräg zur Pflügrichtung und damit zum von ihr zu schneidenden Erdbalken erstreckt.

Das erste Schneidelement wird selbsttätig rotiert, wenn sich die Pflugvorrichtung entlang des Bodens bewegt. Hierbei bewirken Reibungskräfte, dass das erste Schneidelement bewegt wird. Das erste Schneidelement ist dabei bevorzugt derart dimensioniert, dass während des Pflügens nur die untere Hälfte des erste Schneidelements, welche sich unter der ersten Drehachse befindet, in den Boden eindringt, so dass Reibkräfte mit dem Boden die Rotation induzieren können. Die Rotation des bombierten oder tellerförmig ausgebildeten ersten Schneidelements bewirkt ferner, dass der abgetrennte Erdbalken angehoben und zugleich zur Seite abgeleitet wird. Der abgetrennte Erdbalken ist insbesondere in Reibkontakt mit einer ersten Schneidfläche des ersten Schneidelements. Die erste Schneidfläche ist diejenige Fläche des ersten Schneidelements, welche innerhalb der ersten Schneidkante ausgebildet ist. Ferner ist die erste Schneidfläche diejenige Fläche, welche zu dem abgetrennten Erdbalken gerichtet ist. Die erste Schneidfläche kann homogen ohne Aussparungen oder Erhebungen ausgebildet sein. Ferner kann die erste Schneidfläche (d. h. die Mantelfläche des ersten Schneidelements) eine Kegelform bzw. eine Kegelstumpfform ausbilden.

In einer bevorzugten Ausführungsform ist das zweite Schneidelement als runde Scheibe ausgebildet und rotierbar gelagert, wobei die zweite Schneidkante durch den umlaufenden Rand des zweiten Schneidelements definiert ist. Alternativ kann das zweite Schneidelement durch ein verstellbares Schneidmesser mit einer Schneidkante, die sich quer zur Pflügrichtung erstreckt, realisiert sein. Das Schneidelement, welches an seiner Schneide vorzugsweise gezahnt ist, ist vorzugsweise bezogen auf die Pflügrichtung mit einem definierten Winkel mit seiner Spitze leicht nach hinten gerichtet, d. h. hat einen Winkel von größer 90° zur Pflügrichtung. Mittels der zweiten Schneidkante wird der Bodenbereich des Erdbalkens von der Furchensohle des Bodens getrennt, unterschnitten und ggf. zugleich angehoben. Bei einer rotierbaren Scheibe weist die umlaufende zweite Schneidkante einen zweiten Schneidbereich auf. Der zweite Schneidbereich ist derjenige Umfangsabschnitt der zweite Schneidkante, welcher in Pflügrichtung als zweites in Kontakt mit dem Boden kommt und diesen schneidet.

Das erste Schneidelement, eine bombierte Scheibe, schneidet den Erdbalken in einer ersten, vertikalen Schichtebene, beispielsweise bei einer Bearbeitungstiefe ca. 15 bis 35 cm von der Bodenoberfläche ausgehend, ab und leitet den Erdbalken in eine zuvor gebildete Furche.

In der zweiten, horizontalen Schichtebene, die in der Bearbeitungstiefe ca. 15 bis 35 cm von der Bodenoberfläche ausgehend liegt, wird der Erdbalken durch das zweite Schneidelement horizontal d. h. von der Furchensohle, geschnitten.

Der Abstand der beiden Schneidebenen, (oben: rotierendes erstes vertikales Schneidelement; und unten: zweites horizontales Schneideelement) kann durch eine Verstellmöglichkeit des rotierenden Schneidelements angepasst werden.

Der effektive Pflugkörper, bestehend aus den Hauptkomponenten erstes bombiertes Schneidelement und zweites ebenes Schneidelement, wie Schneidmesser oder rotierbare Scheibe, entspricht etwa einer schiefen, gewundenen Ebene, die durch den Boden gezogen wird. Der abgetrennte Erdbalken schiebt sich entlang des bombierten ersten Schneidelements an dessen Innenseite hoch und zur Seite. Dieser Vorgang beinhaltet eine Stauchung der oberen sowie eine Dehnung der unteren Hälfte des Erdbalkens. Innerhalb des Erdbalkens entstehen als Folge Druck-, Zug- und Drehspannungen, die die Zerteilung des Bodens bewirken.

Mit der erfindungsgemäßen Anordnung des zweiten Schneidelements in Pflügrichtung hinter dem ersten Schneidelement kann die Reibkraft, welche ansonsten zu einer hohen benötigten Zugkraft der Pflugvorrichtung führt, reduziert werden. Da der Erdbalken, wenn er von dem ersten Schneidelement an seiner Seite geschnitten wird, bereits durch das zweite Schneidelement von der Furchensohle unterschnitten getrennt ist, wird der Erdbalken von dem ersten Schneidelement bereits angehoben und gewendet. Der zweite Schneidbereich liegt in Pflügrichtung beispielsweise zwischen 1 cm und 50 cm, insbesondere 15 cm bis 25 cm, hinter dem ersten Schneidbereich. Die im Wesentlichen horizontale zweite Schneidscheibe bzw. das Schneidmesser, kommt als zweites in Kontakt mit dem Boden und läuft sozusagen gegenüber der im Wesentlichen vertikal angeordneten ersten Schneidscheibe oder dem Schneidelement nach bzw. hinterher. Diese Anordnung des zweiten Schneidelements "unter-schneidet" die Furchenwand bzw. den zu pflügenden Erdbalken horizontal und erleichtert damit die Schieferung / Furchenräumung wesentlich. Das vertikal angeordnete bombierte erste Schneidelement schneidet den mittels des nachgelagerten zweiten Schneidelements horizontal vorgeschnittenen Erdbalken beim nachfolgenden Zug vertikal ab und wendet ihn durch die Rotationsbewegung der Hohlscheibe zugleich und legt ihn seitlich ab, vorzugsweise in die Furche.

Die Pflugvorrichtung ermöglicht somit einen leichtzügigen Pflüge-Effekt. Der Reibungskoeffizient gegenüber herkömmlichen starren Pflugkörpern wird erheblich herabgesetzt, weil das Schneidelement sich mitdreht. Mit diesem Konzept wird ein leichtzügiger, kraftstoffsparender Pflug bereitgestellt, der zugleich ein nahezu saatbeetfertiges konstantes Furchenbild erzeugt.

Gemäß einer weiteren beispielhaften Ausführungsform ist das zweite Schneidelement ein aktiv rotierbares Schneidelement und die zweite Schneidkante eine das zweite Schneidelement umlaufende Schneidkante. Das zweite Schneidelement kann dabei mittels einer elektrischen oder hydraulischen Antriebsvorrichtung angetrieben bzw. rotiert werden.

Gemäß einer weiteren beispielhaften Ausführungsform ist die erste bzw. zweite Schneidkante des ersten bzw. zweiten Schneidelements bombiert verzahnt und z. B. als konkave Scheibe ausgebildet. Eine bombierte Ausführung bedeutet, dass in der ersten bzw. zweiten Schneidkante Vertiefungen oder Erhebungen (Verzahnung) ausgebildet sind. Damit kann eine verbesserte Schneidwirkung des ersten bzw. zweiten Schneidelements beim Abtrennen des Erdbalkens erzielt werden. Mittels der kugelkalottenförmigen Ausbildung insbesondere des ersten Schneidelementes kann der an ihr entlanggleitende Erdbalken eine Wendung erfahren, so dass auf die Anbringung eines Streichbleches bzw. Leitbleches verzichtet werden kann. Von Vorteil ist es, wenn die erste Schneidkante des ersten Schneidelements und/oder die zweite Schneidkante des zweiten, scheibenförmigen Schneidelements am Umfang Aussparungen aufweisen. Dies ergibt eine Bauform in der Art eines Kreissägeblattes, welches besonders leicht durch das Erdreich dringt und durch Eingriff mit dem Erdreich in Drehung versetzbar ist.

Mittels der beschriebenen Pflugvorrichtung wird eine Zugkraft- / Kraftstoffersparnis durch Leichtzügigkeit der Pflugvorrichtung ermöglicht. Ferner ist die Pflugvorrichtung universell einsetzbar und funktioniert nahezu bei allen Bodenverhältnissen. Außerdem wird durch die Rotationsbewegung des Schneidtellers der Erdbalken kontinuierlich gebrochen. Dadurch wird die gewünschte Krümelung der Scholle (Schollenzerkleinerung) erreicht. Durch den Schollenzerkleinerungs-Effekt können die Nachbearbeitungsgänge reduziert werden. Dies spart Arbeitsgänge bis zur Saatbeet-Bearbeitung. Außerdem wird der Boden vorteilhaft durchmischt. Ferner sind konventionelle Standardkomponenten bzw. Standardzusatzwerkzeuge, wie Düngereinleger und Scheibensech, nicht länger notwendig. Durch das rotierende erste und / oder zweite Schneidelement entsteht weniger Verschleiß und entstehen somit weniger Ersatzteilkosten. Durch diese schonende Bodenbearbeitung wird humusschädigender Metallabrieb von den Schneidelementen gegenüber einer Pflugvorrichtung mit herkömmlichem Streichblech weitestgehend vermieden bzw. vermindert.

Gemäß einer weiteren beispielhaften Ausführungsform weist die Pflugvorrichtung zumindest ein weiteres Pflugmodul mit ebenfalls einem rotierbaren ersten Schneidelement mit einer umlaufenden weiteren ersten Schneidkante auf und ist derart ausgebildet ist, dass bei Bewegen der Trägerstruktur auf dem Boden entlang der Pflügrichtung ein weiterer Seitenbereich eines weiteren Erdbalkens von dem Boden mittels des weiteren Pflugmoduls abschneidbar ist und das weitere erste Schneidelement rotierbar ist, so dass der weitere Erdbalken mittels des weiteren ersten Schneidelements anhebbar ist.

Mit der oben beschriebenen Ausführungsform wird verdeutlicht, dass eine Vielzahl von Pflugmodulen in Pflügrichtung nebeneinander, d. h. entlang einer Richtung orthogonal (in einer Horizontalebene) zu der Pflügrichtung, beabstandet und nebeneinander angeordnet werden können. Somit kann eine Vielzahl von in Pflügrichtung nebeneinander angeordneten Erdbalken aus dem Boden geschnitten, angehoben und gegebenenfalls gewendet werden.

Beim Anordnen einer Vielzahl bzw. Mehrzahl von entsprechenden Pflugmodulen und damit einer entsprechenden Anzahl von Schneidelementen in Pflügrichtung hintereinander kann aufgrund des seitlichen Versatzes der einzelnen Pflugmodule zueinander quer zur Pflügrichtung in einem Zug eine breitere Fläche gepflügt werden, als es der Fall ist, wenn nur ein einziges Pflugmodul in einem Zug zum Einsatz gelangt. Wiederum ist für die Funktionalität der Pflugvorrichtung vorteilhaft, wenn Schneidelemente außer Eingriff und damit aus ihrer eingestellten Position herausschwenkbar sind. Damit ist es möglich, beispielsweise aus einem nachlaufenden Schneidelement ein vorlaufendes zu machen. Das kann in der Kombination mehrerer Pflugmodule einer Pflugvorrichtung vorteilhaft für unterschiedliche Parameter wie beispielsweise auch Bodenbeschaffenheit im Sinne einer optimalen Anpassung sinnvoll bzw. von Vorteil sein.

Mit der erfindungsgemäßen Pflugvorrichtung wird beispielsweise mit dem oberen rotierbaren bombierten ersten Schneideelement selbst ohne ein Leitblech und ohne Streichblech ein schonendes und flaches Wenden des Erdbalkens des Bodens bis z. B. 15 Zentimeter ermöglicht.

In einer beispielhaften Ausführungsform sind das erste Schneidelement und das zweite Schneidelement austauschbar (z. B. mittels Schraubverbindungen) an der jeweiligen Trägerstruktur angeordnet. Die erste Trägerstruktur ist hierbei derart ausgebildet, dass sie an das Grundgerüst der Pflugvorrichtung in lösbarer Weise montierbar ist, was bevorzugt über Schraubverbindungen erfolgt. Zur Steinsicherung können auch Scherbolzen vorgesehen sein. Die hierfür vorgesehenen Montageelemente, wie Bohrungen oder Zapfen, sind bevorzugt derart beschaffen und angeordnet, dass sie mit handelsüblichen Grundgerüsten für Pflugvorrichtungen kompatibel sind. Somit kann das Pflugmodul ohne weiteres an die Grundstruktur einer Pflugvorrichtung an Stelle beispielsweise eines Pflugkörpers nachgerüstet werden.

Aufgrund der Rotation des ersten Schneidelements wird der abgetrennte Erdbalken leicht angehoben, gewendet und auf die Furche abgegeben. Bei Bewegung der Pflugvorrichtung entlang der Pflügrichtung wird der Erdbalken in Pflügrichtung gewendet.

Aufgrund des Anhebens des Erdbalkens mittels des rotierenden ersten Schneidelements kann der Erdbalken energieeffizient in Pflügrichtung hinter dem Schneidelement abgelegt werden.

In einer besonders bevorzugten Ausführungsform des erfindungsgemäßen Pflugmoduls ist das zweite Schneidelement als ein feststehendes Schneidmesser ausgebildet. Das Schneidmesser ist hierbei als eine flache rechteckige, gerade oder gebogene Klinge ausgebildet, welche an einem Endbereich an der zweiten Trägerstruktur befestigt ist. Die Befestigung erfolgt bevorzugt durch Verschraubung, was auch einen einfachen Austausch des zweiten Schneidelements bei Abnutzung ermöglicht. Die Schneide der Klinge zeigt in ihrer Arbeitsstellung in Pflügrichtung und ist generell quer zu dieser Richtung orientiert.

In einer vorteilhaften Abwandlung dieser Bauform ist das Schneidmesser des zweiten Schneidelements L-förmig ausgebildet, wobei ein erster Balken des Schneidmessers in Arbeitsstellung des Pflugmoduls horizontal ausgerichtet ist und ein zweiter Balken im Wesentlichen senkrecht hierzu ausgerichtet ist. Der erste Balken scheidet somit den Bodenbereich des zu bildenden Erdbalkens. Während der zweite, in Arbeitsstellung des Pflugmoduls vertikale Balken vor dem ersten Schneidelement liegt und dessen Eindringen in den Boden erleichtert, da er im Wesentlichen in derselben Ebene wie die vorlaufende Kante des ersten Schneidelements verläuft. Schon aus Gründen der mechanischen Robustheit ist es zweckmäßig, dass das Schneidmesser einstückig ausgebildet ist. Es hat generell die Form einer flachen Klinge, die auf der Vorderseite eine geschärfte Schneide aufweist. Der Anstellwinkel der Klinge in Bezug auf die Pflügrichtung kann einstellbar sein, um zu gewährleisten, dass eine gewünschte Eindringtiefe des Pflugmoduls in den Boden erreicht und gehalten wird.

Die Erfindung umfasst gemäß Anspruch 12 auch eine Pflugvorrichtung, an deren Grundgerüst mindestens ein Pflugmodul gemäß der Erfindung angeordnet ist, vorzugsweise sechs bis 16 derartige Pflugmodule angeordnet sind. Das Pflugmodul ist hierbei bevorzugt über Schraubverbindungen mit dem Grundgerüst fest verbunden, wobei die Verbindung über die erste Trägerstruktur erfolgt. Es versteht sich, dass am Grundgerüst und an der ersten Trägerstruktur kompatible Befestigungselemente wie Bohrungen oder Gewindebolzen ausgebildet sein müssen. Alternativ kann auch ein Adapterelement vorgesehen sein, um das Pflugmodul an verschiedene Grundgerüste von Pflügen anpassen und befestigen zu können. Das Pflugmodul lässt sich somit in einfacher Weise an einem Grundgerüst montieren oder beispielsweise zu Wartungszwecken entfernen.

Im Folgenden werden zur weiteren Erläuterung und zum besseren Verständnis der vorliegenden Erfindung Ausführungsbeispiele unter Bezugnahme auf die beigefügten Zeichnungen näher beschrieben. Es zeigen:
- Fig. 1: eine Darstellung eines Pflugmoduls gemäß einer beispielhaften Ausführungsform der Erfindung;
- Fig. 2: eine schematische Darstellung einer Pflugvorrichtung gemäß einer beispielhaften Ausführungsform der vorliegenden Erfindung während eines Pflügvorgangs;
- Fig. 3: ein Pflugmodul gemäß einer weiteren beispielhaften Ausführungsform der Erfindung, in welcher die alternative Anordnung eines Schneidmessers und einer Schneidscheibe als zweites Schneidelement gezeigt ist;
- Fig. 4: eine Darstellung einer erfindungsgemäßen Pflugvorrichtung als Beetpflugvorrichtung mit drei Pflugmodulen in einer weiteren beispielhaften Ausführungsform der vorliegenden Erfindung und
- Fig. 5: eine Draufsicht auf eine Pflugvorrichtung, bei welcher beispielhaft ein Pflugkörper durch ein erfindungsgemäßes Pflugmodul im Sinne einer Nachrüstung ausgetauscht ist.

Gleiche oder ähnliche Komponenten in unterschiedlichen Figuren sind mit gleichen Bezugsziffern versehen. Die Darstellungen in den Figuren sind weitgehend schematisch und lediglich beispielhaft.

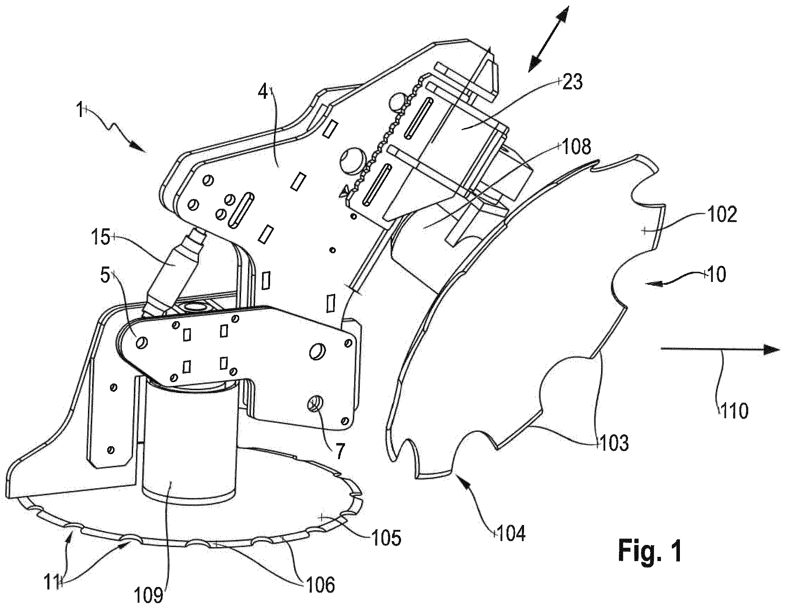

Figur 1 zeigt ein Pflugmodul zum Pflügen eines Bodens 120, bei welchem ein erstes Schneidelement 102 in Form einer kugelkalottenförmigen Hohlscheibe vor einem zweiten Schneidelement 105 in Form eines flachen Tellers in Pflügrichtung hintereinander angeordnet sind. Das erste Schneidelement 102 ist zum Schneiden der Seitenfläche eines Erdbalkens vorgesehen, wohingegen das nach dem ersten Schneidelement 102 angeordnete zweite Schneidelement 105 als flache Scheibe ausgebildet ist, welche den Furchenboden schneidet. Beide Schneidelemente 102, 105 sind mittels einer Trägerstruktur 4, 5 als Pflugmodul zusammengefügt. Die Trägerstruktur 4, 5 kann an einem Grundgerüst (nicht gezeigt) befestigt sein, wobei das zweite Schneidelement 105 mit dem ersten Schneidelement 102 über dessen Trägerstruktur 4 gelenkig verbunden ist.

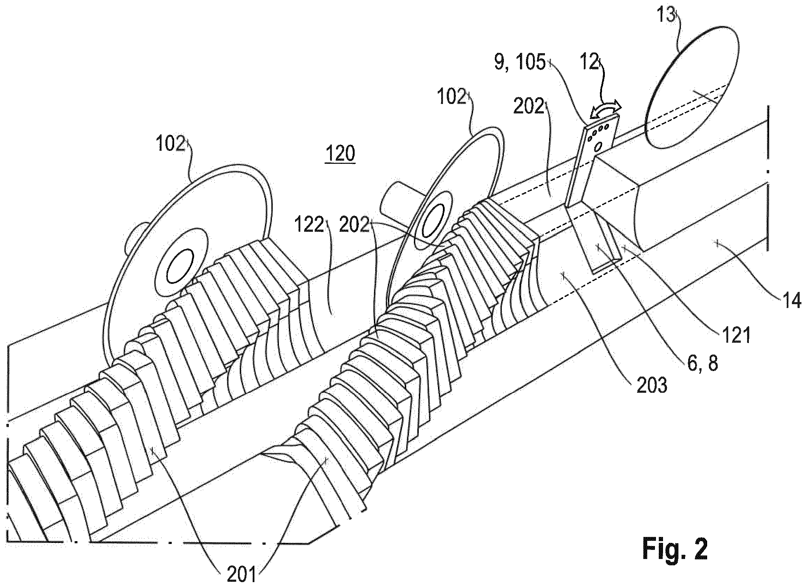

Wie in Fig. 1 gezeigt ist, ist ein rotierbares erstes Schneidelement 102 mit einer umlaufenden, bombierten ersten Schneidkante 103 an einer ersten Trägerstruktur 4 angeordnet und derart ausgebildet, dass bei Bewegen der Trägerstruktur 4 auf dem Boden 120 entlang der Pflügrichtung 110 ein Seitenbereich 202 (siehe Fig. 2) eines Erdbalkens 201 des Bodens 120 mittels eines ersten Schneidbereichs der ersten Schneidkante 103 schneidbar ist, wie in Fig. 2 gezeigt ist. Die Pflügrichtung 110 ist definiert als die Richtung, entlang welcher die Pflugvorrichtung 3 über dem Boden 120 verfahren wird. Ein zweites Schneidelement 105 mit einer zweiten Schneidkante 106 ist an einer zweiten Trägerstruktur 5 angeordnet, die mit der ersten Trägerstruktur 4 lösbar verbunden und gegenüber der ersten Trägerstruktur schwenkbar ist. Das zweite Schneidelement 105 ist derart ausgebildet, dass bei Bewegen der Trägerstruktur 5 auf dem Boden 120 entlang der Pflügrichtung 110 ein Bodenbereich 203 eines Erdbalkens 201 des Bodens 120 mittels eines zweiten Schneidbereichs der zweiten Schneidkante 106 abschneidbar ist, wobei das zweite Schneidelement 105 relativ zu dem ersten Schneidelement 102 in Pflügrichtung 110 derart angeordnet ist, dass der zweite Schneidbereich in Pflügrichtung nach dem ersten Schneidbereich angeordnet ist. Der zweite Schneidbereich ist somit von dem ersten Schneidbereich mit dem Abstand x beabstandet.

Da beim Pflügen das Grundgerüst 2 des Pflugmoduls 1 mit der ersten und zweiten Trägerstruktur 4 und 5 in Richtung Trennfläche 121 des Bodens 120 gedrückt wird, wird entsprechend auch das erste Schneidelement 102 in Richtung einer Trennfläche 121 gedrückt, so dass das erste Schneidelement 102 in der gewünschten Bodentiefe während des Pflügens gehalten wird.

Fig. 2 zeigt eine schematische Darstellung der wesentlichen Funktionselemente einer Pflugvorrichtung gemäß einer beispielhaften Ausführungsform der vorliegenden Erfindung während eines Pflügvorgangs. Diese Figur 2 zeigt die korrekte räumliche Anordnung der ersten und zweiten Schneidelemente 102 und 105 sowie die Bildung und Wendung von Erdbalken 201. Die übrigen Bauteile der zugehörigen Pflugvorrichtung 3 sind der Übersichtlichkeit wegen nicht gezeigt.

Wie in Fig. 2 dargestellt, werden beim Pflügen aus dem Boden 120 sogenannte Erdbalken 201 herausgeschnitten. Ein Erdbalken 201 weist einen Seitenbereich 202 auf, entlang welchem das erste Schneidelement 102 schneidet. Ferner weist der Erdbalken 201 einen Bodenbereich 203 auf, welcher die beiden Seitenbereiche 202 verbindet und mittels des zweiten Schneidelements 105, welches hier beispielhaft als feststehendes Schneidmesser 6 in Doppel-L-Form dargestellt ist, von dem Boden 120 getrennt wird. Entsprechend weist der Boden 120 an dem Bodenbereich 203 des Erdbalkens 201 eine Trennfläche 121, die sog. Furchensohle 121, auf. Nach Herausschneiden des Erdbalkens 201 ist in dem Boden 120 die Furchenwand 122 erkennbar, von welcher der Seitenbereich 202 des Erdbalkens 201 gelöst wurde. Der Bodenbereich 203 definiert somit zum Zeitpunkt des Trennens von dem Boden 120 die in vertikaler Richtung unterste horizontale Fläche des Erdbalkens 201. Die Seitenbereiche 202 des Erdbalkens 201 definieren zum Zeitpunkt des Trennens von dem Boden 120 die seitlichen Wandbereiche des Erdbalkens 201.

Wie in Fig. 1 dargestellt, ist die Trägerstruktur 4 und 5 für die beiden Schneidelemente 102 und 105 so ausgebildet, gemeinsam zumindest das erste Schneidelement 102 und das zweite Schneidelement 105 mit dem Grundgerüst 2 einer Pflugvorrichtung 3 fest zu verbinden. Die erste Trägerstruktur 4 ist über das Grundgerüst 2 der Pflugvorrichtung 3 an einer Zugmaschine, wie beispielsweise einem Traktor, befestigbar, um somit entsprechend die Schneidelemente 102, 105 entlang der Pflügrichtung 110 anzutreiben. Das Pflugmodul 1 weist beispielsweise die erste und zweite Trägerstruktur 4, 5 auf, die fest oder über Gelenke schwenkbar ausgebildet sein können.

Die erste und die zweite Trägerstruktur 4 bzw. 5 bilden somit eine starre Befestigungsstruktur für die Schneidelemente 102, 105. Die Schneideelemente 102, 105 sind derart an den Trägerstrukturen 4, 5 fixiert, dass während des Pflügens keine Relativbewegung zwischen den Positionen der Schneidelemente 102, 105 möglich ist. Wird somit erfindungsgemäß das zweite Schneidelement 105 aufgrund des Schneidens des Erdbalkens 201 in Richtung Boden 120 gedrückt, so wird gleichzeitig auch das erste Schneidelement 102 in den Boden 120 gedrückt, da beide Trägerstrukturen 4, 5 fest miteinander verbunden sind.

Das erste Schneidelement 102 und das zweite Schneidelement 105 sind rotierbar an der jeweiligen Trägerstruktur 4 oder 5 befestigt. Entsprechend besitzt das erste Schneidelement 102 eine Drehachse 108, um welche sich das Schneidelement 102 dreht. Das zweite Schneidelement 105 bildet eine zweite Drehachse 109 aus, um welche sich das zweite Schneidelement 105 dreht. Das erste Schneidelement 102 und das zweite Schneidelement 105 sind hier beispielhaft als kugelkalottenförmiger Schneidteller bzw. als ebene Scheibe ausgebildet und weisen eine kreisrunde Umfangslinie auf. Entlang der Umfangslinie sind die entsprechende umlaufende erste Schneidkante 103 und die zweite Schneidkante 106 ausgebildet. Mittels der ersten Schneidkante 103 wird der Seitenbereich 202 des Erdbalkens 201 von der Furchenwand 122 des Bodens 120 getrennt. Die umlaufende erste Schneidkante 103 weist einen Schneidbereich 104 auf. Der Schneidbereich 104 ist derjenige Umfangsabschnitt der ersten Schneidkante 103, welcher in Pflügrichtung 110 als erstes in Kontakt mit dem Boden 120 kommt und diesen schneidet. Mittels der zweiten Schneidkante 106 wird ein Bodenbereich 203 des Erdbalkens 201 von dem Boden 120 getrennt. Der zweite Schneidbereich der zweiten Schneidkante 106 ist derjenige Umfangsabschnitt des zweiten Schneidelements 105, welcher in Pflügrichtung 110 als zweites Kontakt mit dem Boden 120 aufnimmt bzw. dem ersten Schneidelement nachläuft und diesen schneidet. Der Doppelpfeil 12 in Fig. 2 deutet an, dass das zweite Schneidelement 105 schwenkbar an der zweiten, hier nicht gezeigten Trägerstruktur 5 gelagert ist. Die Schwenkung erlaubt die Einstellung des Anstellwinkels des Schneidmessers 6 in Bezug auf die Pflügrichtung und damit die Eindringtiefe des Pflugmoduls 1 in den Boden 120.

Vor dem Pflugmodul 1 oder mit diesem verbunden kann ein rotierbares Scheibensech 13 angeordnet sein, was den Boden 120 vor dem vertikalen, zweiten Balken 9 eines Schneidmessers 6 und dem ersten Schneidelement 102 vorschneidet bzw. öffnet. Hierdurch wird die für das Pflügen erforderliche Zugkraft vermindert, desgleichen der Verschleiß des Schneidmessers 6 und des nachfolgenden ersten Schneidelements 102. Das Schneidmesser schneidet als Doppel- oder Dreifachschneide horizontal und vertikal.

Das erste Schneidelement 102 wird rotiert, wenn sich die Pflugvorrichtung 3 entlang des Bodens 120 bewegt. Hierbei bewirken beispielsweise Reibungskräfte, dass das Schneidelement 102 bewegt wird. Das Schneidelement 102 ist dabei derart dimensioniert, dass während des Pflügens nur die untere Hälfte des ersten Schneidelements 102, welche sich unter der Drehachse 108 befindet, in den Boden 120 eindringt, so dass Reibkräfte mit dem Boden 120 die Rotation induzieren.

Die Rotation des ersten Schneidelements 102 bewirkt ferner, dass der abgetrennte Erdbalken 201 angehoben wird. Dies wird in Fig. 2 mit den Pfeilen, welche die Förderrichtung 123 des Erdbalkens 201 entlang der Pflugvorrichtung 3 angeben, dargestellt.

Der abgetrennte Erdbalken 201 ist in Reibkontakt mit einer Schneidfläche 113 des Schneidelements 102. Die Schneidfläche 113 ist diejenige Fläche des Schneidelements 102, welche innerhalb der ersten Schneidkante 103 ausgebildet ist bzw. von dieser umgeben wird. Ferner ist die Schneidfläche 113 diejenige Fläche, welche zu dem abgetrennten Erdbalken 201 gerichtet ist. Die Schneidfläche 113 kann, wie in Fig. 1 dargestellt, homogen ohne Aussparungen oder Erhebungen ausgebildet sein.

Aufgrund des Anhebens des Erdbalkens 201 mittels des rotierenden Schneidelements 102 kann der Erdbalken 201 energieeffizient in die benachbarte Furche befördert werden. Diese Furche wurde bei einem vorherigen Durchgang eines Pflugmoduls ausgehoben, wie in Fig. 2 dargestellt ist.

Gemäß Fig. 1 sind das erste Schneidelement 102 und das zweite Schneidelement 105 dabei derart relativ zueinander an der Trägerstruktur 4, 5 befestigt, dass der Schneidbereich 104 des ersten Schneidelements 102 in vertikaler Richtung beabstandet zu dem zweiten Schneidelement 105 ist bzw. über dem zweiten Schneidelement 105 liegt, wenn die Pflugvorrichtung 3 in Arbeitsstellung auf dem Boden 120 aufliegt bzw. in den Boden eindringt.

Das rotierende Schneidelement 102 und das zweite Schneidelement 105 wirken synergistisch zusammen. Einerseits wird mittels des zweiten Schneidelements 105 eine gewünschte Pflugtiefe konstant gehalten, da die abgeschnittenen Erdbalken 201 mit einer definierten Druckkraft / Einzugskraft auf das zweite Schneidelement 105 drücken und somit entgegen einem Auftrieb des rotierenden Schneidelements 102 wirken. Andererseits wird die energetisch vorteilhafte Wirkung des rotierenden Schneidelements 102 beim Schneiden der Erdbalken 201, insbesondere der Seitenflächen bzw. Seitenbereiche 202 der Erdbalken 201, ausgenutzt. Somit wird eine energieeffiziente Pflugvorrichtung 3 bereitgestellt, ohne die Qualität des Furchenbilds negativ zu beeinflussen. Zudem bewirkt das rotierende zweite Schneidelement 105, dass der abgeschnittene Erdbalken 201 in Richtung des ersten Schneidelements 102 gedrückt wird, so dass eine Krümelung des abgeschnittenen Erdbalkens 201 vorgenommen wird. Ferner wird aufgrund einer Seitenkraft, welche mittels des vorgelagerten zweiten Schneidelementes 105 in die erste Trägerstruktur 4 eingetragen wird, dass einer auf das erste Schneidelement 102 während des Schneidens induzierten Seitenkraft entgegengewirkt wird, so dass eine einfachere und bessere Führung der Pflugvorrichtung 3 mit einer Zugmaschine ermöglicht wird.

Das erste Schneidelement 102 und das zweite Schneidelement 105 sind derart zueinander an der ersten und der zweiten Trägerstruktur 4 und 5 angeordnet, dass der zweite, die vordere Hälfte des Schneidelementes 105 umfassende Schneidbereich 107 der zweiten Schneidkante 106 des zweiten Schneidelements 105 in Pflügrichtung 110 mit einem Abstand x nach dem ersten Schneidbereich 104 der ersten Schneidkante 103 des ersten Schneidelements 102 liegt. Somit trifft zuerst während des Pflügens das rotierende erste Schneidelement 105 den Erdbalken 201 seitlich und schneidet ihn energieeffizient mit der zweiten Schneidkante 106 des zweiten Schneidelements 105 diesen vom Restboden 120 ab. Nachfolgend schneidet das erste Schneidelement 105 mit der ersten Schneidkante 103 einen Seitenbereich 202 eines Erdbalkens 201. Das zweite Schneidelement 105 unterscheidet dabei die mit dem ersten Schneidelement 102 geschnittene Furchenwand. Dadurch kann das nachfolgende Schneidelement 102 des nachfolgenden Moduls den Erdbalken seitlich vertikal schneiden und wenden. Anschließend wird der Erdbalken 201 durch die gewölbte Form des ersten Schneidelements 102 und dessen schräge Orientierung zur Pflügrichtung gedreht und in der daneben liegenden Furche abgelegt. Somit schneiden das erste Schneidelement 102 und das zweite Schneidelement 105 energieeffizient den Erdbalken 201 an, und sie werden gleichzeitig mit der auf das zweite Schneidelement 105 wirkenden Druckkraft in der gewünschten Schneidtiefe gehalten.

Das zweite Schneidelement 105 unterschneidet mit einem Bereich (ca. halbe Kreisscheibe) den Erdbalken 201. Ein weiterer Befestigungsbereich des zweiten Schneidelements 105, an welchem eine Befestigungsstange/-welle (Drehachse 109) zur Befestigung mit der ersten Trägerstruktur 4 angeordnet ist, wird an der von dem ersten Schneidelement 102 abgewandten Seite an dem zweiten Schneidelement 105 ausgebildet. Somit verläuft die Befestigungsstange/- welle während des Pflügens in einer bereits bearbeiten Furche, was die Zugkraft der Pflugvorrichtung 3 reduziert.

Die Trägerstruktur 4, 5 ist derart ausgebildet, dass das erste Schneidelement 102 und / oder das zweite Schneidelement 105 entlang der Pflügrichtung 110 und/oder senkrecht, d. h. vertikal zur Pflügrichtung 110, relativ zueinander einstellbar sind. Beispielsweise können das erste Schneidelement 102 mittels Bolzenverbindungen 115, welche in Langlöchern 116 der ersten Trägerstruktur 4 eingreifen können, an der Trägerstruktur 4 verschiebbar befestigt werden. Mittels der Einstellung der Abstände des Schneidelements 102, des zweiten Schneidelementes 105 und der Trägerstruktur 4, 5 entlang der Pflügrichtung 110 kann die Pflugvorrichtung 3 auf spezielle Bedingungen verschiedener Bodenarten eingestellt werden und effizienzoptimiert eingesetzt werden. Ferner können die Elemente nachjustiert werden, falls sich die Elemente nach Benutzung der Pflugvorrichtung 2 verziehen.

Ferner kann die Trägerstruktur 4, 5 derart ausgebildet sein, dass das erste Schneidelement 102 entlang einer Richtungskomponente der ersten Drehachse 108 und das zweite Schneidelement 105 entlang einer Richtungskomponente der zweiten Drehachse 109 relativ zueinander einstellbar sind. Insbesondere kann ein Winkel zwischen der ersten Drehachse 108 und der zweiten Drehachse 109 eingestellt werden. Die erste Schneidkante 103 läuft in einer ersten Schneidebene, während die zweite Schneidkante 106 in einer zweiten Schneidebene verläuft. Das erste Schneidelement 102 und das zweite Schneidelement 105 sind dabei derart relativ zueinander an der jeweiligen Trägerstruktur 4 oder 5 befestigt, dass die erste Schneidebene und die zweite Schneidebene dabei nicht parallel ausgebildet sind und einen Winkel zueinander aufweisen. Beispielsweise ist ein Winkel zwischen der ersten Drehachse 108 und der zweiten Drehachse 109 kleiner als 90°, insbesondere zwischen 45° und 80°.

Entsprechend kann mit der flexiblen Anbringung des Schneidelements 102 und / oder des zweiten Schneidelementes 105 an der Trägerstruktur 4 und 5 ein Abstand zwischen dem Schneidbereich 104 der ersten Schneidkante 103 des Schneidelements 102 und der zweiten Schneidkante 106 des zweiten Schneidelementes 105 eingestellt werden.

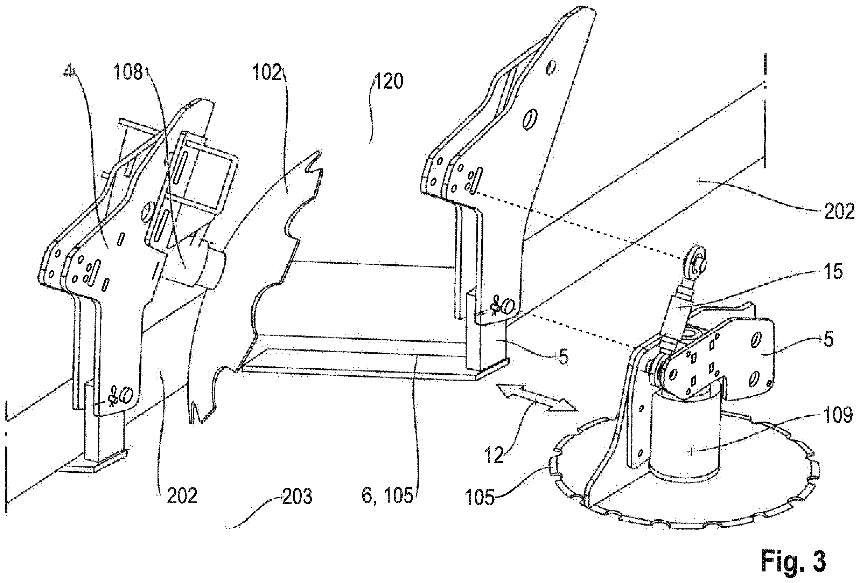

Fig. 3 zeigt ein Pflugmodul 1 gemäß einer beispielhaften Ausführungsform der vorliegenden Erfindung, in welcher das zweite Schneidelement 105 alternativ als rotierende Scheibe 16 oder als feststehendes Schneidmesser 6 ausgebildet ist.

Das erste Schneidelement 102 und / oder das zweite Schneidelement 105 kann schwenkbar, beispielsweise mittels eines Gelenks, an der jeweiligen Trägerstruktur 4 oder 5 befestigt werden, so dass ein Winkel zwischen der ersten Drehachse 108 und der zweiten Drehachse 109 eingestellt und in einer gewünschten Position fixiert werden kann. Diese Möglichkeit ist hier beispielhaft durch einen Hydraulikzylinder oder eine Spindel 15 angedeutet, der bzw. die das in der zweiten Trägerstruktur 5 schwenkbar gelagerte zweite Schneidelement 105 mit der ersten Trägerstruktur 4 verbindet. Die Position des ersten Schneidelements 102, das hier beispielhaft als konkave Scheibe mit bombiertem Rand gezeigt ist, kann ebenfalls in Bezug auf die erste Trägerstruktur 4 beispielsweise hydraulisch eingestellt werden. Durch eine solche Einstellung ist unter anderem die Breite der gebildeten Furche 14 oder das Zusammenwirken der beiden Schneidelemente 102 und 105 beeinflussbar.

Das erste Schneidelement 102 in Fig. 3 weist eine Kugelkalottenform und an seiner ersten Drehachse 108 einen entsprechenden Befestigungsbereich auf, welcher in einer Befestigungsebene ausgebildet ist. Die umlaufende erste Schneidkante 103 verläuft innerhalb der ersten Schneidebene, wobei die Befestigungsebene von der Schneidebene entlang der Drehachse 108 beabstandet ist. Zwischen der umlaufenden ersten Schneidkante 103 und dem Befestigungsbereich ist die Schneidfläche 113 des Schneidelements 102 ausgebildet.

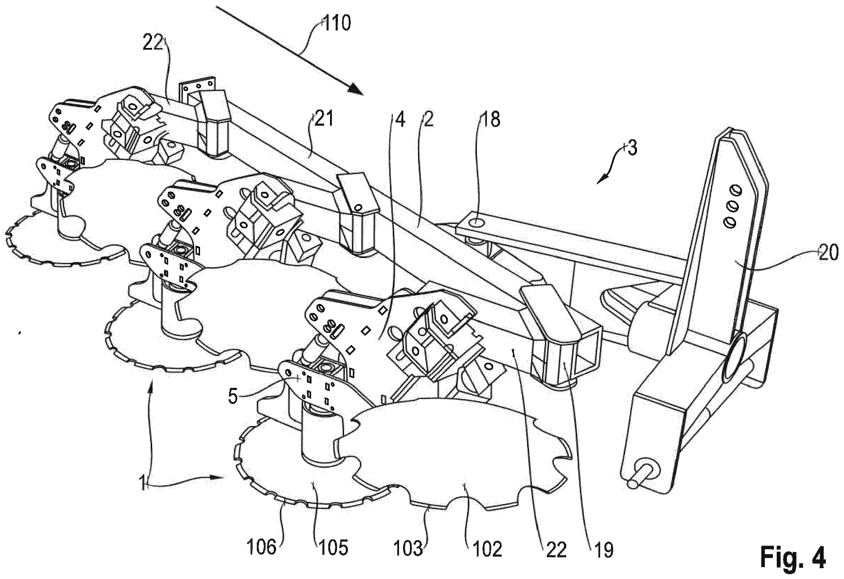

Fig. 4 ist eine Darstellung mit einer erfindungsgemäßen Pflugvorrichtung 3 als Beetpflugvorrichtung, an deren Grundgerüst 2 beispielhaft drei Pflugmodule 1 gemäß der Erfindung gezeigt sind. Jedes der drei gezeigten Pflugmodule weist ein erstes Schneidelement 102 und ein dazu nachlaufendes zweites Schneidelement 105 auf, welche jeweils an einer ersten Trägerstruktur 4 und einer zweiten Trägerstruktur 5 miteinander zu einem einheitlichen Pflugmodul verbunden sind, wobei die zweite Trägerstruktur 5 an der ersten Trägerstruktur schwenkbar angelenkt ist, damit das zweite Schneidelement 105 einen zumindest kleinen Anstellwinkel nach unten in das Erdreich haben kann, um so den nötigen Druck auf die Pflugvorrichtung auszuüben, in der gewünschten Pflügtiefe zu verbleiben und so das als Hohlscheibe ausgebildete erste Schneidelement 102 in der gewünschten Tiefe zum Abschneiden der Seite des Erdbalkens zu gewährleisten. Beim Pflügen in der mit dem Pfeil 110 angegebenen Pflügrichtung ist das erste Schneidelement 102 mit der umlaufenden Schneidkante 103 zum Schneiden der Seiten des Erdbalkens dem zweiten Schneidelement 105 mit ebenfalls umlaufender Schneidkante 106 zum Schneiden des Furchenbodens vorlaufend. Ein erstes Kopplungsteil 20 dient dem Verbinden der Pflugvorrichtung 3 mit beispielsweise einer Zugmaschine, wobei das erste Kupplungsteil 20 gelenkig an dem allgemein balkenförmig ausgebildeten zweiten Kupplungsteil 21 verbunden ist. Das zweite Kupplungsteil 21 stellt prinzipiell das Grundgerüst 2 dar. Am Grundgerüst 2 sind mittels Gelenke 19 die Pflugmodule 1 befestigt.

Beim Ziehen über den Boden120 dringt ein Teil der Pflugmodule bis zu einer konstruktiv vorbestimmten Tiefe in den Boden 120 ein und wirft die dabei erzeugten Erdbalken 201 aus. Die Pflugmodule 1 liegen hierbei im Wesentlichen gestaffelt nebeneinander, so dass mehrere Erdbalken entsprechend ihrer Anzahl erzeugt werden, wie in Fig. 2 erkennbar ist. Diese Erdbalken 201 kommen nach dem Wenden beim Verlassen der ersten Schneidelemente 102 in der von den davor liegenden Schneidelementen 102 gebildeten Furche 14 zu liegen, wie dies in Fig. 2 gezeigt ist.

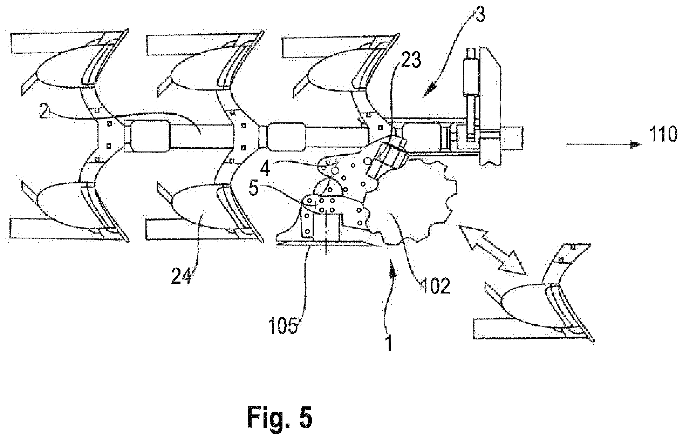

Und schließlich ist in Figur 5 in Draufsicht eine Pflugvorrichtung 3 dargestellt, bei welcher sechs Pflugkörper 24 jeweils paarweise nebeneinander angeordnet sind. Es ist mit dem Doppelpfeil dargestellt, dass die Pflugkörper 24 gegen die erfindungsgemäßen Pflugmodule 1 ausgetauscht werden können. Dies ist bezüglich des Montageaufwandes besonders einfach, weil die kompletten Pflugmodule 1 gegen die ursprünglich an der Pflugvorrichtung montierten Pflugkörper 24 austauschbar sind, ohne dass sich der Montageaufwand nennenswert erhöht. Die Pflugmodule 1 gemäß der Erfindung weisen ein erstes, vorlaufendes Schneidelement 102 zum Schneiden der Seiten des Erdbalkens und ein nachlaufendes Schneidelement 105 zum Schneiden des Furchenbodens auf. Das zweite Schneidelement 105 ist an einer Trägerstruktur 5 befestigt, wohingegen das erste Schneidelement 102 an einer ersten Trägerstruktur 4 angebracht ist. Die Trägerstruktur 4 und die Trägerstruktur 5 sind miteinander verbunden, und zwar derart, dass die zweite Trägerstruktur 5 verschwenkbar ist, um den Anstellwinkel des zweiten Schneidelementes 105 bezüglich des Furchenbodens einstellen zu können. Das erste Schneidelement 102 ist in mehreren Freiheitsgraden verstellbar, so dass durch die Verstellung einerseits die Pflugbreite, andererseits das Zusammenwirken zwischen dem ersten Schneidelement 102 und dem zweiten Schneidelement 105 in Abhängigkeit von den Bodenparametern und auch hinsichtlich weiterer Parameter einstellbar ist. So ist beispielsweise das erste Schneidelement 102 mittels eines Schlittens 23 an der ersten Trägerstruktur 4 verstellbar angebracht, so dass deren Höhe bezüglich der Ebene, welche durch das zweite Schneidelement 105 geschnitten wird, einstellbar ist.

**Bezugszeichenliste**

| | | | |
|---|---|---|---|
| 1 | Pflugmodul | 110 | Pflügrichtung |
| 2 | Grundgerüst / Pflugbaum | 113 | Schneidfläche |
| 3 | Pflugvorrichtung | 120 | Boden |
| 4 | erste Trägerstruktur | 121 | Trennfläche / Furchensohle |
| 5 | zweite Trägerstruktur | 201 | Erdbalken |
| 6 | Schneidmesser | 202 | Seitenbereich |
| 7 | Gelenk | 203 | Bodenbereich |
| 8 | erster Balken | | |
| 9 | zweiter Balken | | |
| 10 | Aussparung | | |
| 11 | Aussparung | | |
| 12 | Doppelpfeil | | |
| 13 | Scheibensech | | |
| 14 | Furche | | |
| 15 | Hydraulikzylinder / Spindel | | |
| 16 | Scheibe | | |
| 17 | Pfeil | | |
| 18 | Gelenk | | |
| 19 | Gelenk | | |
| 20 | erstes Kopplungsteil | | |
| 21 | zweites Kopplungsteil | | |
| 22 | Schwenkarm | | |
| 23 | Schlitten | | |
| 24 | Pflugkörper | | |
| 102 | erstes Schneidelement | | |
| 103 | erste Schneidkante | | |
| 104 | Schneidbereich erstes Schneidelement | | |
| 105 | zweites Schneidelement | | |
| 106 | zweite Schneidkante | | |
| 107 | Schneidbereich zweites Schneidelement | | |
| 108 | Drehachse erstes Schneidelement | | |
| 109 | Drehachse zweites Schneidelement | | |

## Patentansprüche

1. Pflugmodul (1) zur auswechselbaren Montage an einem Grundgerüst (3) einer Pflugvorrichtung (2) zum Pflügen eines Bodens, wobei das Pflugmodul (1) aufweist:
- ein rotierbares, als bombierter Schneidteller ausgebildetes erstes Schneidelement (102) mit einer umlaufenden ersten Schneidkante (103), wobei das erste Schneidelement (102) derart ausgebildet ist, dass durch Bewegen des Pflugmoduls (1) auf dem Boden (120) entlang einer Pflügrichtung (110) ein Seitenbereich (202) eines Erdbalkens (201) des Bodens (120) schneidbar ist,
- ein zweites, ebenes Schneidelement (105) mit einer zweiten Schneidkante (106), wobei das zweite Schneidelement (105) derart ausgebildet ist, dass durch Bewegen des Pflugmoduls (1) auf dem Boden (120) entlang einer Pflügrichtung (110) ein Bodenbereich (203) des Erdbalkens (201) des Bodens (120) abschneidbar ist,
**dadurch gekennzeichnet,**
**dass** das Pflugmodul (1) als fertig montierte Baueinheit ausgebildet ist, bei welchem das zweite Schneidelement (105) in Pflügrichtung (110) mit seiner Schneidkante dem ersten Schneidelement (102) nachläuft und
- eine erste Trägerstruktur (4), an der das erste Schneidelement (102) angeordnet ist,
- eine zweite Trägerstruktur (5), an der das zweite Schneidelement (105) angeordnet ist und die mit der ersten Trägerstruktur (4) verbunden ist, vorgesehen ist, und
- **dass** die erste Trägerstruktur (4) Mittel zur lösbaren Befestigung an einem Grundgerüst (3) der Pflugvorrichtung (2) aufweist.

2. Pflugmodul gemäß Anspruch 1, **dadurch gekennzeichnet, dass** die zweite Trägerstruktur (5) über ein Gelenk (7) schwenkbar mit der ersten Trägerstruktur (4) verbunden ist.

3. Pflugmodul gemäß Anspruch 1 oder 2, **dadurch gekennzeichnet, dass** das erste Schneidelement (102) derart verschieblich an der ersten Trägerstruktur (4) angeordnet ist, dass der Abstand zwischen der ersten Schneidkante (103) des ersten Schneidelements (102) und der zweiten Schneidkante (106) des zweiten Schneidelements (105) einstellbar ist.

4. Pflugmodul (1) gemäß einem der Ansprüche 1 bis 3, wobei das erste Schneidelement (102) und zweite Schneidelement (105) derart zueinander angeordnet sind, dass der Schneidbereich (104) der ersten Schneidkante (103) des ersten Schneidelements (102) von der zweiten Schneidkante (106) des zweiten Schneidelements (105) vertikal beabstandet ist.

5. Pflugmodul (1) gemäß einem der Ansprüche 1 bis 4, wobei der erste Schneidbereich (104) innerhalb einer ersten Schneidebene und der zweite Schneidbereich (118) in einer zweiten Schneidebene ausgebildet sind, wobei die erste Schneidebene und die zweite Schneidebene zueinander einen Winkel von 30° bis 135°, insbesondere 45° bis 110°, ausbilden.

6. Pflugmodul (1) gemäß einem der Ansprüche 1 bis 5, wobei das bombierte erste Schneidelement (102) kegelförmig oder kegelstumpfförmig ausgebildet ist.

7. Pflugmodul (1) gemäß einem der Ansprüche 1 bis 6, wobei die erste Schneidkante (103) des ersten Schneidelements (102) und/oder die zweite Schneidkante (106) des zweiten, scheibenförmigen Schneidelements (105) am Umfang Aussparungen (10,11) aufweisen.

8. Pflugmodul (1) gemäß einem der Ansprüche 1 bis 7, wobei das zweite Schneidelement (105) ein rotierbares Schneidelement ist und die zweite Schneidkante (106) eine umlaufende Schneidkante (106) ist.

9. Pflugmodul (1) gemäß einem der Ansprüche 1 bis 5, wobei das zweite Schneidelement (105) ein feststehendes Schneidmesser (6) ist.

10. Pflugmodul gemäß Anspruch 9, **dadurch gekennzeichnet, dass** das Schneidmesser (6) des zweiten Schneidelements (105) L-förmig ausgebildet ist, wobei ein erster Balken (8) des Schneidmessers (6) in Arbeitsstellung des Pflugmoduls (1) horizontal ausgerichtet ist und ein zweiter Balken (9) im Wesentlichen senkrecht hierzu ausgerichtet ist.

11. Pflugmodul gemäß Anspruch 10, **dadurch gekennzeichnet, dass** das Schneidmesser (6) einstückig ausgebildet ist.

12. Pflugvorrichtung (2) mit einem Grundgerüst (3), **dadurch gekennzeichnet, dass** am Grundgerüst (3) der Pflugvorrichtung (2) mindestens ein Pflugmodul (1) gemäß einem der voranstehenden Ansprüche 1 bis 11 angeordnet ist.

## Claims

1. A plow module (1) for replaceable installation on a base frame (3) of a plow device (2) for plowing ground, wherein the plow module (1) comprises:
- a rotatable first cutting element (102) formed as a crowned cutting plate, having a circumferential first cutting edge (103), wherein the first cutting element (102) is formed in such a way that, by moving the plow module (1) on the ground (120) along a plowing direction (110), a lateral region (202) of a soil strip (201) of the ground (120) can be cut,
- a second, flat cutting element (105) having a second cutting edge (106), wherein the second cutting element (105) is formed in such a way that by moving the plow module (1) on the ground (120) along the plowing direction (110) a bottom region (203) of the soil strip (201) of the ground (120) can be severed,
**characterized in that**
the plow module (1) is formed as a fully mounted assembly in which the second cutting element (105) with its cutting edge follows the first cutting element (102) in the plowing direction (110) and
- a first carrier structure (4) is provided, on which the first cutting element (102) is arranged,
- a second carrier structure (5) is provided, on which the cutting element (105) is arranged and which is connected to the first carrier structure (4),
- the first carrier structure (4) has means for releasable attachment to a base frame (3) of the plow device (2).

2. The plow module according to claim 1, **characterized in that** the second carrier structure (5) is connected via a hinge (7) to the first carrier structure (4).

3. The plow module according to claim 1 or 2, **characterized in that** the first cutting element (102) is displaceably arranged on the first carrier structure (4) in such a manner that the distance between the first cutting edge (103) of the first cutting element (102) and the second cutting edge (106) of the second cutting element (105) is adjustable.

4. The plow module (1) according to any of claims 1 to 3, wherein the first cutting element (102) and second cutting element (105) are arranged in relation to one another in such a manner that the cutting region (104) of the first cutting edge (103) of the first cutting element (102) is vertically set at a distance from second cutting edge (106) of the second cutting element (105).

5. The plow module (1) according to any of claims 1 to 4, wherein the first cutting region (104) is formed within a first cutting plane and the second cutting region (118) within a second cutting plane, wherein the first cutting plane and the second cutting plane form an angle with each other from 30° to 135°, in particular from 45° to 110°.

6. The plow module (1) according to any of claims 1 to 5, wherein the crowned first cutting element (102) has a conical or truncated-cone design.

7. The plow module (1) according to any of claims 1 to 6, wherein the first cutting edge (103) of the first cutting element (102) and/or the second cutting edge (106) of the second, disc-shaped cutting element (105) has recesses (10, 11) on the perimeter.

8. The plow module (1) according to any of claims 1 to 7, wherein the second cutting element (105) is a rotatable cutting element and the second cutting edge (106) is a circumferential cutting edge (106).

9. The plow module (1) according to any of claims 1 to 5, wherein the second cutting element (105) is a stationary cutting knife (6).

10. The plow module according to claim 9, **characterized in that** the cutting knife (6) of the second cutting element (105) has an L-shaped design, wherein a first bar (8) of the cutting knife (6) is horizontally aligned in the working position of the plow module (1) and a second bar (9) is aligned essentially perpendicular thereto.

11. The plow module according to claim 10, **characterized in that** the cutting knife (6) has a one-piece design.

12. The plow device (2) comprising a base frame (3), **characterized in that** at least one plow module (1) according to any of the preceding claims 1 to 11 is arranged on the base frame (3) of the plow device (2).

## Revendications

1. Module de labour (1) pour le montage interchangeable sur un bâti de base (3) d'un dispositif de labour (2) pour labourer un sol, le module de labour (1) présentant :
- un premier élément de coupe (102) rotatif, réalisé sous forme de disque de coupe bombé, avec une première arête de coupe périphérique (103), le premier élément de coupe (102) étant réalisé de telle sorte qu'en déplaçant le module de labour (1) sur le sol (120) le long d'une direction de labour (110), une zone latérale (202) d'une motte de terre (201) du sol (120) peut être coupée,
- un deuxième élément de coupe plan (105) avec une deuxième arête de coupe (106), le deuxième élément de coupe (105) étant réalisé de telle sorte qu'en déplaçant le module de labour (1) sur le sol (120) le long d'une direction de labour (110), une zone de fond (203) de la motte de terre (201) du sol (120) peut être coupée,
**caractérisé en ce que**
le module de labour (1) est réalisé sous forme d'unité de construction entièrement montée, dans laquelle le deuxième élément de coupe (105) suit le premier élément de coupe (102) avec son arête de coupe dans la direction de labour (110) et
- une première structure de support (4), sur laquelle est agencé le premier élément de coupe (102),
- une deuxième structure de support (5), sur laquelle est agencé le deuxième élément de coupe (105) et qui est reliée à la première structure de support (4), est prévue, et
- **en ce que** la première structure de support (4) présente des moyens pour la fixation amovible sur un bâti de base (3) du dispositif de labour (2).

2. Module de labour selon la revendication 1, **caractérisé en ce que** la deuxième structure de support (5) est reliée de manière pivotante à la première structure de support (4) par l'intermédiaire d'une articulation (7).

3. Module de labour selon la revendication 1 ou 2, **caractérisé en ce que** le premier élément de coupe (102) est agencé de manière coulissante sur la première structure de support (4) de telle sorte que la distance entre la première arête de coupe (103) du premier élément de coupe (102) et la deuxième arête de coupe (106) du deuxième élément de coupe (105) est réglable.

4. Module de labour (1) selon l'une quelconque des revendications 1 à 3, dans lequel le premier élément de coupe (102) et le deuxième élément de coupe (105) sont agencés l'un par rapport à l'autre de telle sorte que la zone de coupe (104) de la première arête de coupe (103) du premier élément de coupe (102) est espacée verticalement de la deuxième arête de coupe (106) du deuxième élément de coupe (105).

5. Module de labour (1) selon l'une quelconque des revendications 1 à 4, dans lequel la première zone de coupe (104) est réalisée à l'intérieur d'un premier plan de coupe et la deuxième zone de coupe (118) est réalisée dans un deuxième plan de coupe, le premier plan de coupe et le deuxième plan de coupe formant entre eux un angle de 30° à 135°, notamment de 45° à 110°.

6. Module de labour (1) selon l'une quelconque des revendications 1 à 5, dans lequel le premier élément de coupe bombé (102) est réalisé sous forme conique ou tronconique.

7. Module de labour (1) selon l'une quelconque des revendications 1 à 6, dans lequel la première arête de coupe (103) du premier élément de coupe (102) et/ou la deuxième arête de coupe (106) du deuxième élément de coupe (105) en forme de disque présentent des évidements (10, 11) sur la circonférence.

8. Module de labour (1) selon l'une quelconque des revendications 1 à 7, dans lequel le deuxième élément de coupe (105) est un élément de coupe rotatif et la deuxième arête de coupe (106) est une arête de coupe périphérique (106).

9. Module de labour (1) selon l'une quelconque des revendications 1 à 5, dans lequel le deuxième élément de coupe (105) est une lame de coupe fixe (6).

10. Module de labour selon la revendication 9, **caractérisé en ce que** la lame de coupe (6) du deuxième élément de coupe (105) est réalisée en forme de L, une première barre (8) de la lame de coupe (6) étant orientée horizontalement dans la position de travail du module de labour (1) et une deuxième barre (9) étant orientée essentiellement perpendiculairement à la celle-ci.

11. Module de labour selon la revendication 10, **caractérisé en ce que** la lame de coupe (6) est réalisée d'un seul tenant.

12. Dispositif de labour (2) avec un bâti de base (3), **caractérisé en ce que** sur le bâti de base (3) du dispositif de labour (2) est agencé au moins un module de labour (1) selon l'une quelconque des revendications 1 à 11 précédentes.
